Europäisches Patentamt

European Patent Office

Office européen des brevets

(19)

(11) Publication number: **0 054 533**
**A2**

(12) **EUROPEAN PATENT APPLICATION**

(21) Application number: **81850248.6**

(22) Date of filing: **17.12.81**

(51) Int. Cl.³: **B 29 H 5/04**

(30) Priority: **17.12.80 SE 8008885**

(43) Date of publication of application:
**23.06.82 Bulletin 82/25**

(84) Designated Contracting States:
**BE CH DE FR GB IT LI NL SE**

(71) Applicant: **Scandinaviska Industrirobot System AB**
**(Scan Rob AB)**
**Barnarpsvägen 16**
**S-562 00 Norrahammar(SE)**

(72) Inventor: **Richter, Sören**
**Mjölomstigen 22**
**S-562 00 Norrahammar(SE)**

(72) Inventor: **Hansson, Arne**
**c/o AB ARITMOS Stortorget 7**
**S-251 14 Hälsingborg(SE)**

(74) Representative: **Österberg, Karl-Erik et al,**
**DR. LUDWIG BRANN PATENTBYRA AB Drottninggatan**
**7 Box 1344**
**S-751 43 Uppsala(SE)**

(54) A device for a retreading plant of the type having individual vulcanization chambers of the press mold type.

(57) A device for a retreading plant is suggested, wherein tyres prepared for retreading and comprising a carcass or a casing and a tread band applied thereupon will be vulcanized by the aid of heat and pressure. The retreading plant comprises a number of individual vulcanization chambers (13) of the press mold type. The process heat and pressure which is let out at the end of the vulcanization process is led via a conduit (16) into a preheating compartment (12) wherein not yet vulcanized tyres (10) are stored, and thereby a preheating of said tyres (10) is achieved so that the vulcanization process time and hence the energy consumption thereby can be decreased. The conduit (16) comprises fan means (17), distribution nozzles for internal air circulation for the heated process air, and a pressure reducing valve.

EP 0 054 533 A2

A device for a retreading plant of the type having individual
vulcanization chambers of the press mold type

TECHNICAL FIELD

The present invention relates generally to a device for a retreading plant, and the invention relates more in detail to an energy saving preheating device for a plant for retreading tyres, said plant being of the type provided with individual vulcanization chambers.

BACKGROUND

During retreading truck and passenger car tyres the previously used but still intact cancasses or casings are provided with a new tread band subsequent to removal of the used tread band. This operation takes place in a retreading plant. During hot vulcanization pretreaded tread bands are not used, which is the case in the autoclave process, but the tread bands are produced in the vulcanization chamber in one single operation, which takes place at a temperature of about 135-160°C and a shorter time period, which regarding passenger car tyres is about 15-25 minutes and regarding truck tyres about 1 hour.

The above mentioned previously known technique suffers from among other things the drawback that the energy consumption is substantial because when the vulcanization process is terminated all the heated air is let out in the surrounding air without taking advantage of the energy contents thereof, and then new tyres at room temperature (about 20°C) are located in the vulcanization chamber and a new heating period is started.

OBJECT OF THE INVENTION

The present invention is among other things aiming to eliminate the above mentioned drawback of the previously known technique. In accordance with the invention said aim is achieved by using the characterizing features of the invention which can be seen in the attached claims.

## DESCRIPTION OF THE FIGURES

The invention will below be described closer with reference to the attached figures, wherein

FIGURE 1 in a side elevational schematical view illustrates a plant in accordance with the invention wherein the vulcanization process takes place in individual vulcanization chambers, and

FIGURE 2 schematically illustrates the plant according to Fig. 1 seen from above.

## PREFERRED EMBODIMENT

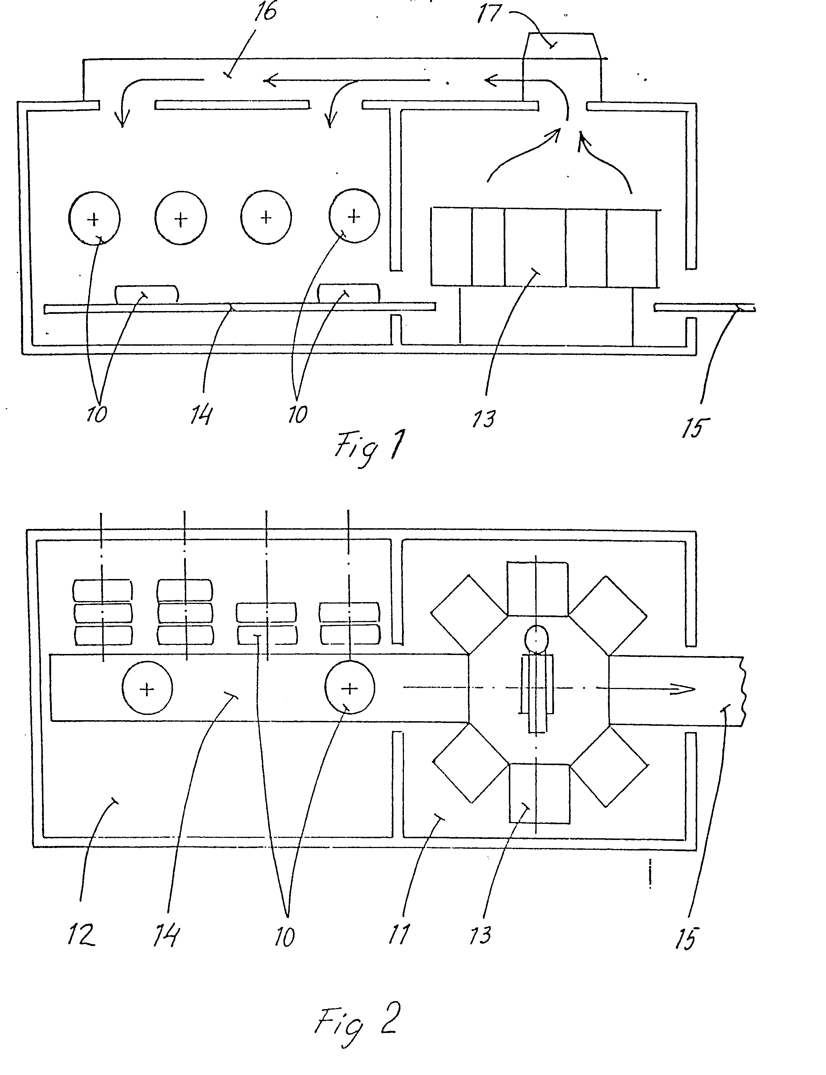

Figs. 1 and 2 illustrate a preferred embodiment of the invention comprising a number of individual vulcanization chambers 13, each of which should contain a tyre for the vulcanization process. Preprepared carcasses or casings are stored in a buffer store 12 for later transportation via a transport track 14 into the process chamber 11, wherein a schematically illustrated industrial automatic machine or robot grasps the individual tyres 10 and locates them one by one within the individual vulcanization chambers 13 being opened at that time point. After that the tyres are located in the chambers 13 said chambers are closed, process heat is supplied and the vulcanization operation takes place. Then, the vulcanization chambers are opened and the industrial robot grasps the completely vulcanized tyres one by one and locates the tyres upon a discharge part 15 of the transport track. As most clearly can be seen from Fig. 1 the air comprising the process heat will be discharged from the vulcanization chambers and sucked out therefrom via a fan system 17 provided in a transfer conduit 16, which is leading to and opens in the buffer store 12. The tyres 10 stored therein will thereby be preheated and the energy consumption during the vulcanization process can be decreased because the heating time will be substantially shortened by said preheating process taking place in the buffer store 12. A further preheating effect is obtained by arranging the transport track 15 to run back into the buffer store 12 so that the heat from the completely vulcanized tyres also is used for preheating the tyres of the buffer store 12.

## INDUSTRIAL UTILITY

The expert within this technical field realizes that different modifications and variations may be carried out to the invention within the frame of the invention without leaving the basic idea thereof. It is additionally realized that the buffer chamber suitably is built up by units having walls and roof and being openable upon the two short sides thereof. In order to avoid heat losses an air sluice is also suitably provided. The plant is provided with suitable automatic equipment for the transport tracks etc. and thereby, the system will be automatical. Laboratory tests have shown that the vulcanization time can be substantially shortened by using the invention.

CLAIMS

1.    A device for a retreading plant wherein tyres prepared for retreading and comprising a carcass or a casing and a tread band applied thereon will be vulcanized by the aid of heat and pressure, said retreading plant comprising a plurality of individual vulcanization chambers (13) of the press mold type, c h a r a c t e r i z e d by the fact that the process heat and process pressure which is  let out at the end of the vulcanization process is  led via a conduit (16) into a preheating compartment (12) wherein still not yet vulcanized tyres (10) are stored and thereby, a preheating of said tyres (10) is achieved so that the vulcanization process time and hence the energy consumption can be decreased thereby.

2.    The device according to claim 1, c h a r a c t e r i z e d by the fact that said conduit (16) comprises fan means (17) and distribution nozzles for internal air circulation for the heated process air.

3.    The device according to claim 2, c h a r a c t e r i z e d by the fact that a pressure reducing valve is provided in said conduit (16).

4.    The device according to claim 1 or 2, c h a r a c t e r i z e d by the fact that the preheating chamber (12) is built up as a unit provided with isolated walls and roof and being openable at the two short sides thereof.

5.    The device according to claim 4, c h a r a c t e r i z e d by the fact that an air sluice is provided for preventing heat losses.

6.    The device according to claim 1 or 2, c h a r a c t e r i z e d by the fact that said preheating chamber (12) comprises a buffer store (12) comprising tyres (10) being prepared for the vulcanization process, a transport track (14) being provided whereby said tyres (10) one by one is supplied to the vulcanization part (11) of the plant.

7.    The device according to claim 6, c h a r a c t e r i z e d by the fact that an industrial robot is provided to transfer the individual tyres (10) one by one into individual vulcanization chambers (13), and subsequent to the complete vulcanization process moves the tyres onto a discharge transport track (15).

8.    The device according to one or more of claims 1-7, c h a r a c-

t e r i z e d by the fact that the preheating chamber (12) contains two sets of tyres (10), one of said sets comprising not yet vulcanized tyres while the other set comprises vulcanized tyres, whereby the process heat contained in the vulcanized tyres will be delivered during a preheating period and transferred to the not yet vulcanized tyres (10), said tyres being preheated thereby.

0054533

Fig 1

Fig 2